(19) Europäisches Patentamt
European Patent Office
Office européen des brevets

(11) **EP 2 118 512 B1**

(12) **EUROPÄISCHE PATENTSCHRIFT**

(45) Veröffentlichungstag und Bekanntmachung des Hinweises auf die Patenterteilung:
**04.05.2016 Patentblatt 2016/18**

(21) Anmeldenummer: **07858196.4**

(22) Anmeldetag: **28.12.2007**

(51) Int Cl.:
*F16D 55/2265* (2006.01)   *F16D 65/14* (2006.01)
*F16D 65/54* (2006.01)

(86) Internationale Anmeldenummer:
**PCT/EP2007/064600**

(87) Internationale Veröffentlichungsnummer:
**WO 2008/080962 (10.07.2008 Gazette 2008/28)**

(54) **SCHEIBENBREMSE, INSBESONDERE FÜR EIN NUTZFAHRZEUG**

DISK BRAKE, PARTICULARLY FOR A COMMERCIAL VEHICLE

FREIN À DISQUE, NOTAMMENT POUR UN VÉHICULE UTILITAIRE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **05.01.2007 DE 102007001213**

(43) Veröffentlichungstag der Anmeldung:
**18.11.2009 Patentblatt 2009/47**

(73) Patentinhaber: **KNORR-BREMSE Systeme für Nutzfahrzeuge GmbH**
**80809 München (DE)**

(72) Erfinder:
• **PERICEVIC, Aleksandar**
  **80636 München (DE)**
• **PITZING, Stephan**
  **81675 München (DE)**
• **BAUMGARTNER, Johann**
  **85368 Moosburg (DE)**
• **GEISSLER, Steffen**
  **85399 Hallbergmoos (DE)**
• **TRIMPE, Robert**
  **82234 Wessling (DE)**

(74) Vertreter: **Mattusch, Gundula**
**C/o Knorr-Bremse AG**
**Moosacherstrasse 80**
**80809 München (DE)**

(56) Entgegenhaltungen:
EP-A- 0 645 551   WO-A-01/36838
DE-A1- 3 148 133   DE-A1- 19 946 677
DE-B- 1 211 448   JP-A- 8 232 995
JP-A- 2004 308 805   US-A- 5 647 459

EP 2 118 512 B1

**EP 2 118 512 B1**

**Beschreibung**

Die Erfindung betrifft eine Scheibenbremse, insbesondere für ein Nutzfahrzeug entsprechend dem Oberbegriff des Anspruchs 1.

Im Funktionsfall, d.h. bei einer Bremsung erfolgt die Zuspannung der Bremsbeläge mittels der Zuspanneinrichtung zunächst durch Andrücken des zuspannseitigen Bremsbelages gegen die Bremsscheibe und einem nachfolgenden Anpressen des gegenüberliegenden, reaktionsseitigen Bremsbelages, wobei hierzu der als Schiebesattel ausgebildete Bremssattel entgegen der Zuspannrichtung des aktionsseitigen Bremsbelages verschoben wird.

Nach einem Lösen der Bremse verbleibt bei der bekannten Schiebesattelscheibenbremse der Bremssattel in dieser letztgenannten Position, in der die Bremsbeläge, zumindest aber der reaktionsseitige Bremsbelag zwar drucklos, jedoch schleifend an der Bremsscheibe anliegt. Die dadurch im Fahrbetrieb auftretenden sozusagen Restschleifmomente führen zu einem erhöhten Kraftstoffverbrauch des Fahrzeuges ebenso wie zu einer Verringerung der Standzeit sowohl der Bremsscheibe wie auch der Bremsbeläge.

Ein geringes Lösen der Bremsbeläge erfolgt im Fahrbetrieb durch einen Taumelschlag der Bremsscheibe sowie durch Erschütterungen und Querbeschleunigungen bei Kurvenfahrten. Diese Effekte sind jedoch nicht ausreichend, um das genannte Schleifen wirksam zu verhindern.

Um diese Nachteile zu vermeiden, ist aus der DE 199 46 677 A1 eine Scheibenbremse entsprechend der Gattung bekannt, bei der eine Rückstelleinrichtung ein im Bremssattel gelagertes Stützteil aufweist, das gleitend auf einem Führungsholm eines Befestigungselementes geführt ist, das fest mit dem Bremsträger verbunden ist und das zusammen mit dem Stützteil als Gleitlager fungiert.

Bei einer Verschiebung des Bremssattels zum Anpressen des reaktionsseitigen Bremsbelages wird das Stützteil gegen ein als Druckfeder ausgebildetes elastisches Rückstellelement gedrückt, das nach einem Lösen der Bremse den Bremssattel in eine Ausgangsstellung zurückführen soll.

Für einen verschleißbedingten Ausgleich des Lüftspiels, der zuspannseitig mittels einer Nachstelleinrichtung erfolgt, ist das Stützteil in einer Reibhülse gelagert, die unter Haftreibung am Stützteil anliegt. Dabei ist der Reibungskoeffizient zwischen dem Stützteil und der Reibhülse so gewählt, dass die Reibhülse im normalen Bremsbetrieb am Stützteil haftet, während sie bei Verstellung des Bremssattels mittels der Nachstelleinrichtung unter Überwindung der Reibung entsprechend auf dem Stützteil gleitet, bis der Nachstellhub erreicht ist.

Allerdings ist die Rückstellung des Bremssattels ausschließlich abhängig vom Federweg des als Druckfeder ausgebildeten Rückstellelementes, was jedoch eine exakte Zurückführung auf ein immer gleiches Lüftspielmaß zwischen der Bremsscheibe und dem reaktionsseitigen Bremsbelag nicht ermöglicht, so dass die bekannte Scheibenbremse eine eher unbefriedigende Lösung des Problems darstellt.

In der DE 12 11 448 B ist eine Scheibenbremse geoffenbart, bei der eine Rück- und Nachstellung des Bremssattels durch eine entsprechende Ausbildung eines Führungsbolzens erreicht wird, wobei die Nachstellung bei Betätigung einer Handbremse erfolgt.

In der DE 31 48 133 A1 ist eine Schiebesattel-Scheibenbremse gezeigt und beschrieben, bei der ebenfalls die Rückstellung des Bremssattels ausschließlich abhängig ist vom Federweg des als Druckfeder ausgebildeten Rückstellelements.

Eine solche Konstruktion ist gleichfalls aus der EP 645 551 A1 bekannt.

Der Erfindung liegt die Aufgabe zugrunde, eine Scheibenbremse der gattungsgemäßen Art so weiterzuentwickeln, dass eine im Bezug auf das Lüftspiel gleichbleibende Rückstellung des Bremssattels gewährleistet ist.

Diese Aufgabe wird durch eine Scheibenbremse mit den Merkmalen des Anspruchs 1 gelöst.

Gegenüber dem zitierten Stand der Technik, bei dem die ein Stützteil bildende, auf dem Führungsholm gelagerte Buchse beim bremsbedingten Verschieben des Bremssattels auf dem Führungsholm gleitet und gegen ein federndes Rückstellelement gedrückt wird, bleibt nun das Stützteil während des bremsbedingten Verschiebens in seiner Lage unverändert am Führungsholm gehalten.

Hierzu ist das Stützteil so ausgebildet, dass es mit Haftreibung am Führungsholm anliegt, die derart bemessen ist, dass die beim Bremsen wirksame Verschiebekraft nicht ausreicht, die Haftreibung zu überwinden.

Erst bei Betätigung der Nachstelleinrichtung, durch die ein Verschleißhub der Bremsbeläge ausgeglichen wird, ist eine höhere Kraft wirksam, die das Stützteil um den Nachstellhub auf dem Führungsholm verschiebt.

Durch die ansonsten gegenüber dem Führungsholm verharrende Position des Stützteiles wird das federnde Rückstellelement um den Betrag des Lüftspiels verformt und bei Entlastung, also bei Beendigung der Bremsung, um exakt diesen Betrag, der dem Lüftspiel entspricht, in seine Ursprungsposition zurückgesetzt, unter Mitnahme des Bremssattels, d.h. unter dessen Verschiebung entgegen der Zuspannrichtung.

Das Stützteil und das Rückstellelement können beispielsweise einstückig ausgebildet sein, wobei das Stützteil aus einer konzentrischen, den Führungsholm umfangenden Buchse und mehreren, parallel und abständig zueinander angeordneten, die Buchse als Ringe umfassenden Lippen ausgebildet sind, die aus einem elastischen, also federnden Material bestehen, die sich beim bremsbedingten Verschieben des Bremssattels gegenüber der Buchse im Übrigen in deren axialer Richtung verformen. Bei Beendigung der Bremsung führen die Lippen, die im Übrigen fest mit dem Bremssattel verbunden sind, aufgrund der innewohnenden Rückstellkräfte den Bremssattel in seine Ausgangsposition zurück, entsprechend dem vorgegebenen Lüftspiel.

Nach einem weiteren Gedanken der Erfindung besteht das Stützteil aus einem mit Haftreibung am Führungsholm anliegenden Haftring, der vorzugsweise in einer umlaufenden Innennut einer Aufnahmehülse einliegt, an deren einer Stirnseite sich das federnde Rückstellelement abstützt, das als Schraubenfeder ausgebildet sein kann, die direkt oder indirekt auf dem Führungsholm axial verschieblich gelagert ist.

Anstelle eines solchen Haftringes in Kombination mit der Aufnahmehülse, die gemeinsam das Stützteil bilden, kann das Stützteil auch aus mindestens einem Klemmring, vorzugsweise einer Packung Klemmringe bestehen, die unter Vorspannung und damit Erzeugung von Haftreibung am Führungsholm anliegen. Auch hier stützt sich das Rückstellelement in Form der Schraubenfeder stirnseitig an einem Klemmring an, während die andere Stirnseite der Schraubenfeder an einer Schulter des Bremssattels anliegt.

Solche Klemmringe sind als handelsübliche Bauteile bekannt und weisen zur Erzeugung der Vorspannung jeweils einen durchgehenden Längsschlitz auf.

Bei einer bremsbedingten Verschiebung des Bremssattels wird die Schraubenfeder entsprechend zusammengedrückt, die andererseits an einem starr mit dem Bremssattel verbundenen Teil oder direkt am Bremssattel anliegt, wobei die zu überwindende Federkraft hierbei geringer ist als die durch die Haftreibung des Stützteiles erzeugte Haltekraft, so dass der Bremssattel auf der den Haftring aufnehmenden Aufnahmehülse oder den Klemmringen gleitet. Erst bei einer größeren auf die Schraubenfeder einwirkenden Kraft und einer damit einhergehenden Erhöhung der Federkraft, wie sie sich beim verschleißbedingten Nachstellen des Bremssattels ergibt, wird die Haftreibung des Stützteiles überwunden und dies entsprechend weitergeführt, bis das Maß des Verschleißhubes erreicht ist.

Üblicherweise sind bei einer gattungsgemäßen Scheibenbremse zwei Befestigungselemente vorgesehen, mit denen der Bremssattel am Bremsträger in Richtung der Bremsscheibe axial verschiebbar gehalten ist. Dabei ist ein Anbindungsbereich als Fest- und der andere Anbindungsbereich als Loslager ausgebildet, in jedem Fall aber als Gleitlager.

Da das Festlager funktionsbedingt einen größeren Bauraum benötigt, vor allem eine größere Baulänge, bietet sich dieser Bereich für die Platzierung der Rückstelleinrichtung an. Ergänzend kann bei ungünstigen Einbauverhältnissen und hohem Rückstellkraftbedarf zusätzlich eine Rückstelleinrichtung im Loslager eingesetzt werden.

In diesem Fall wird die erforderliche Rückstellkraft und die Klemmkraft der Stützteile, d.h. deren Haftreibung am Führungsholm auf beide Rückstelleinrichtungen aufgeteilt. Zweckmäßig ist die Rückstellkraft am Festlager höher als am Loslager. Hierbei kann es ausreichend sein, die Rückstelleinrichtung des Loslagers mit einem die genannten umfänglichen elastischen Lippen versehenen Elastomerring auszustatten, während das Festlager mit einem oder mehreren Klemmringen zu versehen ist.

Die Ausführungsvariante, bei der das Stützteil aus einem Klemmringpaket besteht, ist in zwei unterschiedlichen Auslegungsmöglichkeiten realisierbar.

Bei einer ersten Variante ist die maximal mögliche Verstellkraft des Rückstellelementes, sprich der Rückstellfeder, geringer als die minimal mögliche Stellkraft der Nachstelleinrichtung.

Hierbei wird der Bremssattel bei Nachstellvorgängen gegen die Kraft der Rückstellfeder mit dem reaktionsseitigen Bremsbelag an die Bremsscheibe herangezogen. Das gesamte Lüftspiel besteht nun auf der Aktionsseite und wird dort als Gesamtlüftspiel eingestellt. Insoweit ist dies identisch mit Scheibenbremsen ohne eine aktive Sattelrückstellung.

Nach dem Einstellen des Lüftspiels bzw. nach einer nachfolgenden Bremsung, stellt die Rückstelleinrichtung den Bremssattel um den vorbestimmten Betrag zurück und erzeugt so das Lüftspiel auf der Reaktionsseite. Die Einstellung des Gesamtlüftspiels erfolgt daher ausschließlich durch die Nachstelleinrichtung. Die Aufteilung des Gesamtlüftspiels auf die Aktions- (Innen-) und Reaktionsseite (Außenseite) wird durch die Sattelrückstellung bestimmt.

Beispiel: Das Gesamtlüftspiel wird durch die Nachstelleinrichtung auf 0,9 mm eingestellt;
die Rückstelleinrichtung stellt um 0,4 mm zurück;
Lüftspiel reaktionsseitig = 0,4 mm;
Lüftspiel aktionsseitig = 0,9 mm - 0,4 mm = 0,5 mm.

Bei einer zweiten Variante ist die minimal mögliche Kraft des Rückstellelementes größer als die maximal mögliche Stellkraft der Nachstelleinrichtung.

Hierbei wird der Bremssattel bei einer Verschleiß-Nachstellung nicht mit dem äußeren Bremsbelag an die Bremsscheibe angelegt, da die Verstellkraft der Nachstelleinrichtung geringer ist als die Rückstellkraft des federnden Rückstellelementes. Die Verschleißnachstellung erfolgt hierbei nur auf der Aktionsseite der Bremse. D.h., das dort einzustellende Lüftspiel beträgt nur etwa die Hälfte des Gesamtlüftspiels.

Die Lüftspieleinstellung auf der Außenseite erfolgt, indem bei der auf den Nachstellvorgang folgenden Bremsbetätigung der Bremssattel durch die Betätigungskraft der Bremse auch auf der Außenseite (Reaktionsseite) an die Bremsscheibe herangezogen wird. Nach der Bremsbetätigung stellt die Rückstelleinrichtung den Bremssattel um den voreingestellten Betrag zurück und erzeugt so das Lüftspiel auf der Außenseite.

Wenn bei einer Bremsung als Folge des eingetretenen Verschleißes auf der Reaktionsseite eine Verschiebung des Stützteiles eingetreten ist, führt diese Verschiebung nach der Rückstellung des Bremssattels zu einer Vergrößerung des Lüftspiels auf der Aktionsseite, wo es bei den nächsten Nachstellvorgängen wieder korrigiert wird.

Beispiel:

Vor einer Bremsung: Lüftspiel aktionsseitig = 0,5 mm

Lüftspiel reaktionsseitig = 0,4 mm.

Bremsung mit 0,05 mm Verschleiß pro Seite:

Stützteil wird um 0,05 mm verschoben.

Nach dem Lösen der Bremse:

$$\text{Lüftspiel aktionsseitig} = 0,5 + 0,05 + 0,05 = 0,6 \text{ mm}$$

$$\text{Lüftspiel reaktionsseitig} = 0,4 \text{ mm.}$$

Bei nachfolgenden Lüftspieleinstellungen durch Nachstelleinrichtung wird die Lüftspielvergrößerung aktionsseitig wieder kompensiert.

Während die Variante 1 aufgrund der geringen notwendigen Rückstellkräfte des Rückstellelementes insbesondere für den sozusagen Normaleinsatz von Nutzfahrzeugen besonders geeignet ist, zeigt die Variante 2 besondere Vorteile bei Nutzfahrzeugen, die in einem rauen Betrieb eingesetzt werden, beispielsweise als Baustellenfahrzeuge.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:

Figur 1 eine Draufsicht auf eine Scheibenbremse in einer schematischen Darstellung

Figuren 2 und 3 ein Ausführungsbeispiel der Erfindung, jeweils als eine im Längsschnitt dargestellte Einzelheit in verschiedenen Funktionsstellungen

Figuren 4 und 5 jeweils weitere Ausführungsbeispiele, ebenfalls als längsgeschnittene Einzelheit dargestellt

Figur 6 einen vergrößerten Teilausschnitt des in der Figur 5 gezeigten Beispiels

Figur 7 einen Teilausschnitt eines weiteren Ausführungsbeispiels, gleichfalls in einem Längsschnitt

Figur 8 eine Einzelheit der Figur 7 in einer Vorderansicht

Figuren 9 und 10 jeweils weitere Ausführungsbeispiele als im Längsschnitt dargestellte Einzelheiten.

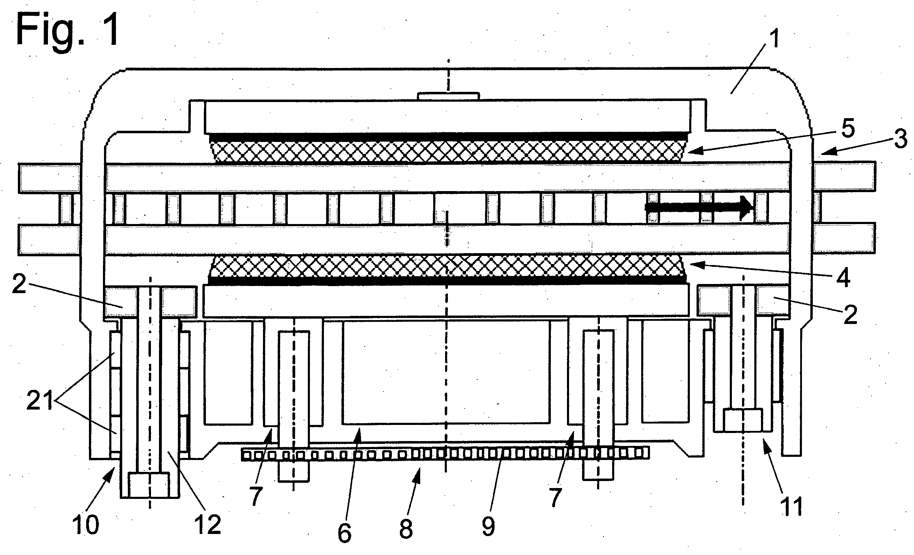

Die in der Figur 1 dargestellte Scheibenbremse für ein Nutzfahrzeug besteht in ihrem Grundaufbau aus einem eine Bremsscheibe 3 übergreifenden Bremssattel 1, in dem zwei Bremsbeläge 4, 5 angeordnet sind, die im Funktionsfall die Bremsscheibe 3 beidseitig kontaktieren.

Der Bremssattel 1 ist über zwei Befestigungselemente an einem fahrzeugseitigen Bremsträger 2 befestigt, wobei ein, entsprechend der Pfeilrichtung auslaufseitiges Befestigungselement als Loslager 11 und das gegenüberliegende, einlaufseitige Befestigungselement als Festlager 10 ausgebildet sind.

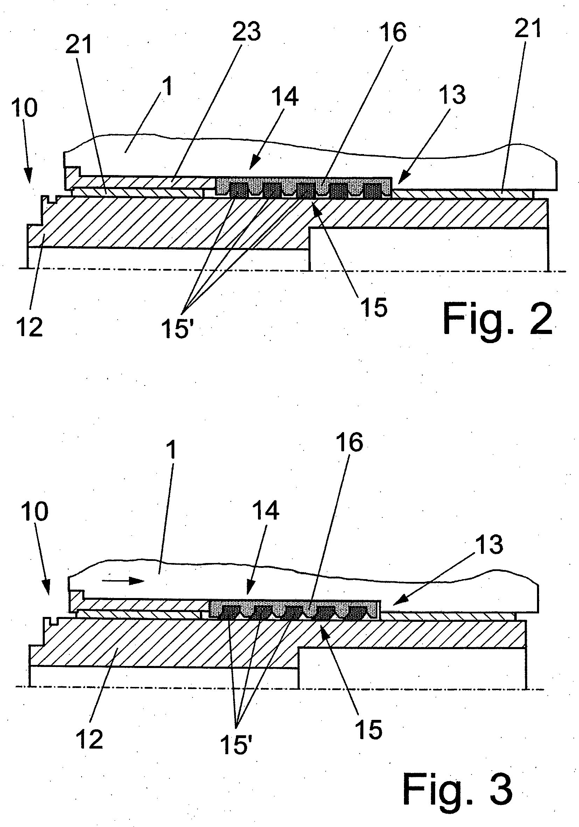

Dabei weist das Festlager 10 einen am Bremsträger 2 festgelegten Führungsholm 12 auf, auf dem in Richtung der Bremsscheibe 3 axial verschiebbare, im Bremssattel (1) axial gesicherte Gleithülsen 21 (Figur 2) gelagert sind.

Den Befestigungselementen zugeordnet ist eine Zuspanneinrichtung, die an eine Brücke 6 des Bremssattels 1 angreift und die hier zwei Stellspindeln 7 aufweist, über die der angeschlossene Bremsbelag 4 gegen die Bremsscheibe 3 pressbar ist.

Eine der beiden Stellspindeln 7 weist eine Nachstelleinrichtung 8 auf, mit der eine verschleißbedingte Änderung eines Lüftspiels zwischen dem Bremsbelag 4 und der Bremsscheibe 3 im Wesentlichen ausgleichbar ist. Für eine synchrone Betätigung der Stellspindeln 7 ist ein Transmissionselement, z.B. in Form einer Kette 9 vorgesehen, mit dem die beiden Stellspindeln 7 gleichzeitig verdrehbar sind.

Bei einer Bremsung wird zunächst der zuspannseitige Bremsbelag 4 gegen die Bremsscheibe 3 gepresst, während nachfolgend aufgrund der sich ausbildenden Reaktionskräfte der als Schiebesattel ausgebildete Bremssattel 1 unter Mitnahme des reaktionsseitigen Bremsbelages 5 entgegengesetzt der Zuspannrichtung geführt und der Bremsbelag 5 gegen die Bremsscheibe 3 gepresst wird.

Um eine Rückstellung des Bremssattels 1 beim Lösen der Bremse zu erreichen, d.h., den Bremssattel 1 in seine Ausgangsstellung zurückzuführen, ist aktions-, d.h., zuspannseitig, vorzugsweise im Bereich des Festlagers 10 eine Rückstelleinrichtung 13 vorgesehen, mit welcher der Bremssattel 1 entgegen der Verschieberichtung beim Zuspannen selbsttätig in die Ausgangsstellung bringbar ist.

Diese Rückstelleinrichtung 13 weist erfindungsgemäß ein beim bremsbedingten Verschieben des Bremssattels 1 in seiner Lage gegenüber dem Bremsträger 2 verharrendes Stützteil 15 auf, das mit dem federnd ausgebildeten Rückstellelement 14 unter dessen Verformung in Wirkverbindung steht.

Bei dem in den Figuren 2 und 3 gezeigten Ausführungsbeispiel wird das Stützteil 15 aus mehreren, parallel und abständig zueinander angeordneten, den Führungsholm 12 umgreifenden, aus einem elastischen Material bestehenden Stützlippen 15' gebildet, die durch Haftreibung derart am Führungsholm 12 gehalten sind, dass sie bei Verformung durch die Verschiebung des Bremssattels 1 beim Bremsen in ihrer Position gegenüber dem Führungsholm 12 nicht verändert werden.

Während die Figur 2 eine unbelastete Stellung der Stützteile 15 wiedergibt, zeigt die Figur 3 eine Zuspannstellung des Bremssattels 1. Hierbei sind die Stützlippen 15' kopfseitig entsprechend verformt und zwar in Richtung des Pfeiles in Figur 3.

Nach einer Beendigung des Bremsvorgangs wird der Bremssattel 1 aufgrund der in den Stützlippen 15' vorhandenen Rückstellkräfte in eine Ausgangsposition zurückgeführt, wie sie in der Figur 2 deutlich ist. Dabei ist der Haftreibungskoeffizient zwischen den Stützlippen 15' und dem Führungsholm 12 einerseits und sind die gemeinsam wirkenden Rückstellkräfte der Stützlippen 15' andererseits so ausgelegt, dass bei einem normalen Bremsvorgang die Stützlippen 15' in ihrer Position verharren, während der Bremssattel nach Beendigung der Bremsung in eine Stellung zurückgeführt wird, in der das vorbestimmte Lüftspiel zwischen dem reaktionsseitigen Bremsbelag 5, der am Bremssattel 1 angeschlossen ist, und der Bremsscheibe 3 wiederhergestellt ist.

Der genannte Reibungskoeffizient zwischen den Stützlippen 15' und dem Führungsholm 12 ist so gewählt, dass bei einer verschleißbedingten Nachstellung mittels der Nachstelleinrichtung 8, bei der der Bremssattel 1 das verschleißbedingt größere Lüftspiel durch entsprechendes Verschieben des Bremssattels 1 überwindet, die Stützlippen 15' um den entsprechenden Betrag auf dem Führungsholm 12 entlanggleiten, bis dieser Verschleißhub ausgeglichen ist. Danach erfolgt wiederum eine Rückstellung durch Zurückformen der Stützlippen 15' um den Betrag des vorgegebenen Lüftspiels.

Für eine Verbindung zwischen den Stützlippen 15' und dem Bremssattel 1 ist ein Mitnehmer 16 am Bremssattel 1 befestigt, der innen liegende, umlaufende Nuten aufweist, in die jeweils eine ringförmige Stützlippe 15' eingefügt ist, wobei diese Ringnuten so ausgebildet sind, dass eine Auslenkung der Stützlippen 15', entsprechend der Darstellung in Figur 3, ohne weiteres möglich ist.

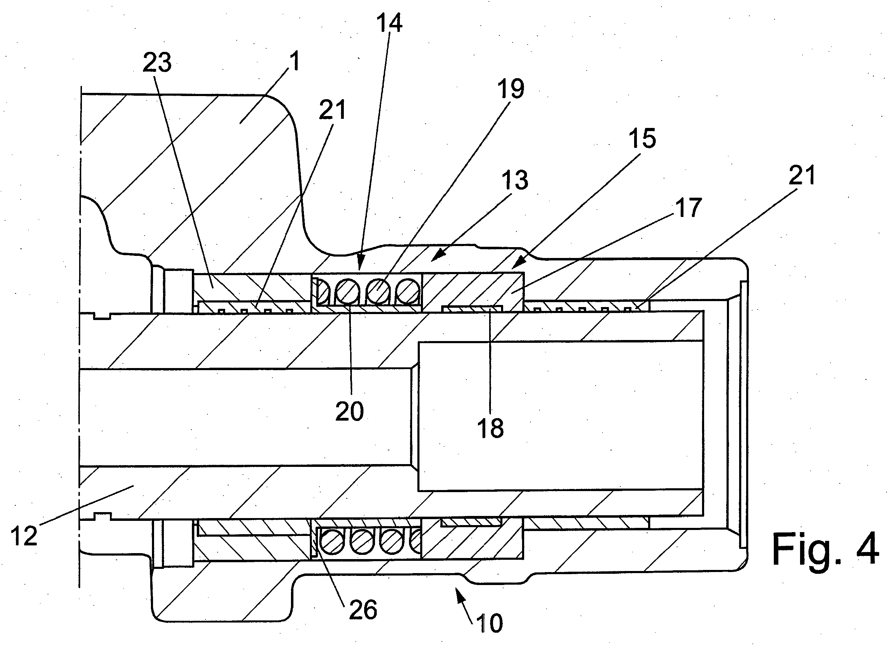

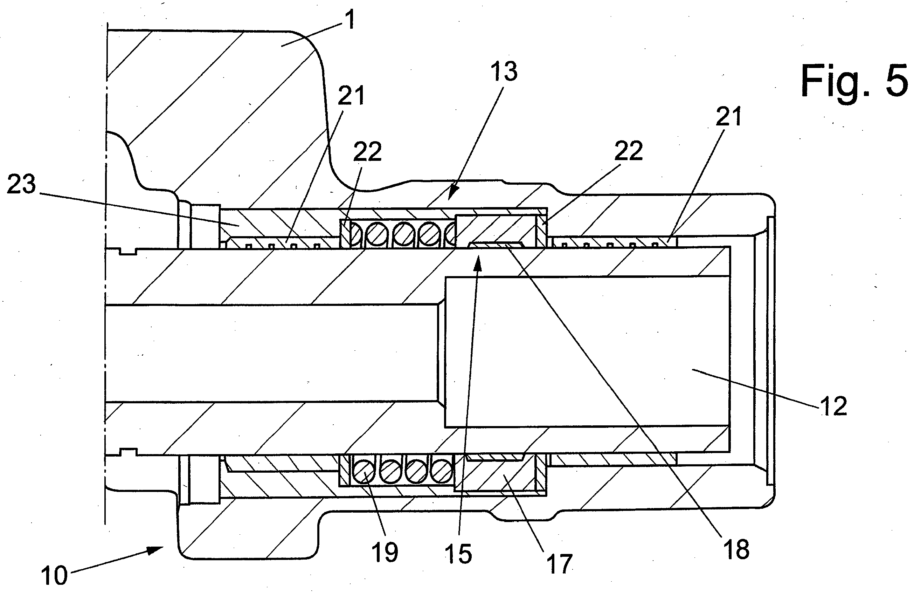

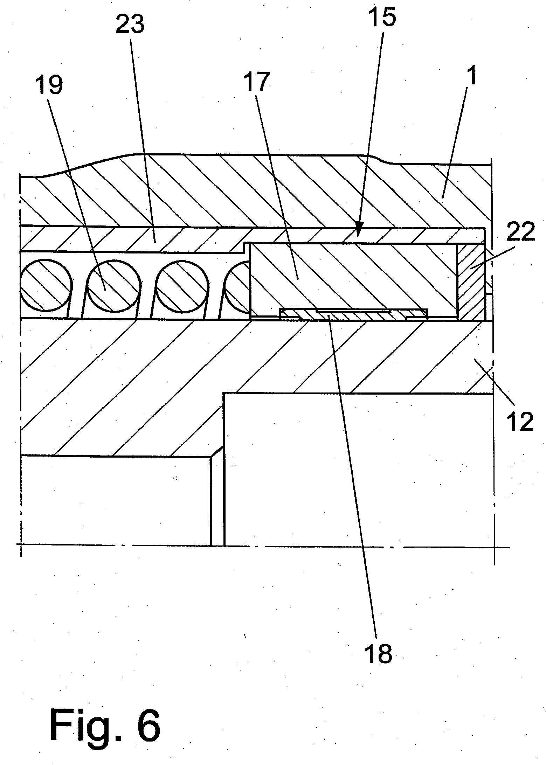

Bei den in den Figuren 4 und 5 gezeigten Ausführungsbeispielen besteht das Stützteil 15 jeweils aus einer Aufnahmehülse 17, die den Führungsholm 12 außenseitig umgreift. Diese Aufnahmehülse 17 weist eine Innennut auf, in der ein Haftring 18 axial gesichert einliegt und der mit Haftreibung am Führungsholm 12 anliegt. In der Figur 6 ist ein vergrößerter Teilausschnitt des Stützteiles 15 dargestellt.

An einer, und zwar der der Bremsscheibe zugewandten Stirnseite der Aufnahmehülse 17 liegt das Rückstellelement 14 in Form einer Schraubenfeder 19 an, die konzentrisch auf dem Führungsholm 12 geführt ist.

Bei der Ausführungsvariante gemäß der Figur 4 liegt die Schraubenfeder 19 auf der äußeren Mantelfläche einer Anschlaghülse 20 auf, die axial verschiebbar auf dem Führungsholm 12 gelagert ist, ebenso wie eine zugeordnete Gleithülse 21, die an einer Lagerhülse 23 des Bremssattels 1 befestigt ist und die ihre Entsprechung auf der gegenüberliegenden, der der Aufnahmehülse 17 benachbarten Seite findet.

Der Reibungskoeffizient zwischen dem Haftring 18 und dem Führungsholm 12 ist dem vergleichbar, wie er zum Beispiel entsprechend den Figuren 2 und 3 beschrieben ist.

Bei einem bremsbedingten Verschieben des Bremssattels 1 wird die Schraubenfeder 19 durch einen Kragen 26 der Anschlaghülse 20, an der die Schraubenfeder 19 auf ihrer der Aufnahmehülse 17 gegenüberliegenden Seite anliegt, zusammengedrückt, bis die Anschlaghülse 20, die zuvor abständig zur Aufnahmehülse 17 angeordnet ist, an dieser anliegt. Der Abstand zwischen der zugeordneten Stirnseite der Anschlaghülse 20 und der Aufnahmehülse 17 entspricht dem vorbestimmten Lüftspiel zwischen dem reaktionsseitigen Bremsbelag 5 und der Bremsscheibe 3.

Nach einem Lösen der Bremse entspannt sich die Schraubenfeder 19 unter Verschieben des Bremssattels 1 entgegen dessen Zuspannrichtung bei einer Bremsung. Da der Abstand der Anschlaghülse 20 zur Aufnahmehülse 17 in Nicht-Funktionsstellung der Bremse, also in entlasteter Stellung der Schraubenfeder 19 dem gewünschten Lüftspiel entspricht, wird exakt dieses Lüftspiel durch die Rückstellung des Bremssattels 1 mittels der Schraubenfeder 19 vollzogen. Dabei kommt der Bremssattel 1 in der entspannten Endlage an der Aufnahmehülse 17 zur Anlage, wozu der Bremssattel eine Stufenbohrung aufweist, in die die Anschlaghülse 17 mit dem integrierten Haftring 18, das Rückstellelement 14 und die Lagerhülse 23 eingesetzt sind.

Für eine Vormontage der genannten Teile zu einer Baueinheit sind bei dem in der Figur 5 gezeigten Beispiel Stützringe 22 vorgesehen, von denen sich einer an der der Schraubenfeder 19 abgewandten Stirnseite der Aufnahmehülse 17 und der andere an der gegenüberliegenden Stirnseite der Schraubenfeder 19 abstützt. Diese Stützringe 22 sind in die Lagerhülse 23 eingesetzt und mit dieser fest verbunden, wobei die Dicke der Stützringe 22 dem Lüftspiel entspricht.

Durch die Vormontagemöglichkeit der Rückstelleinrichtung 13, umfassend die Lagerhülse 23, die der Bremsscheibe 3 zugewandt liegende Lagerhülse 21, die Stützringe 22, die zwischen diesen eingeschlossenen Schraubenfeder 19 und die Aufnahmehülse 17 mit integriertem Haftring 18 ist eine einfache Montage möglich, wobei die Lagerhülse 23 praktisch einen Außenmantel bildet, der vorzugsweise mit dem Bremssattel 1 verpresst oder verklebt ist.

Bei einer verschleißbedingten Nachstellung wird die Aufnahmehülse 17 und der darin einliegende Haftring 18 unter Überwindung dessen Haftreibung am Führungsholm 12 in der bereits geschilderten Art und Weise verschoben, bis der Verschleißhub ausgeglichen ist und der Bremssattel um den Betrag des einzuhaltenden Lüftspiels zurückgeführt ist.

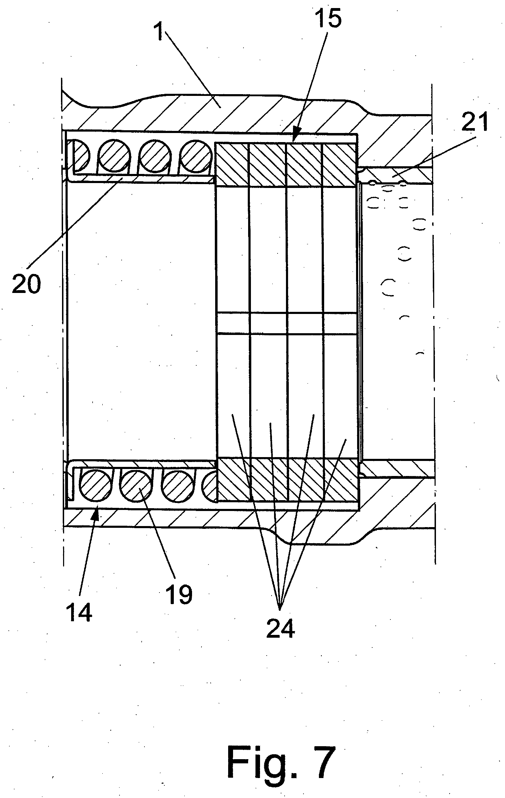

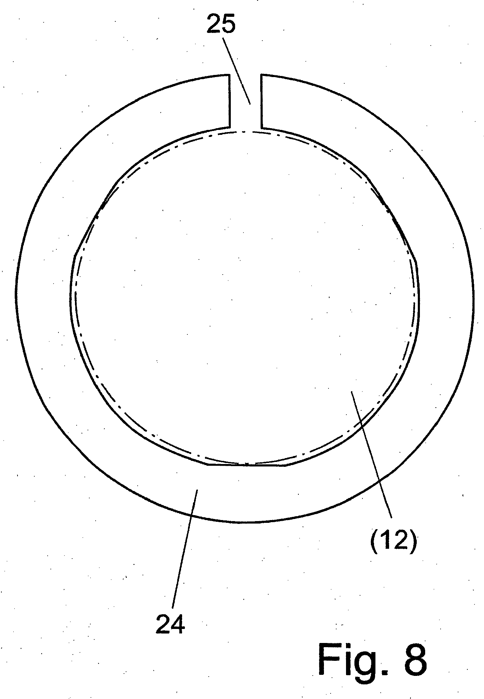

In den Figuren 7 und 8 schließlich ist eine weitere Ausführungsvariante des Stützteiles 15 dargestellt, in der dies aus mehreren, ein Paket bildenden Klemmringen 24 besteht, die unter Vorspannung auf dem Führungsholm gehalten sind, wobei diese Vorspannung, vergleichbar der Haftreibung der zuvor beschriebenen Stützteile 15 durch eine entsprechende Formgebung der Klemmringe 24 erreicht wird, wie sie in der Figur 8 sehr deutlich zu erkennen ist. Dabei kann jeder Klemmring 24 aus einem Federblech gebildet sein, mit einem Längsschlitz 25, durch den die wirksame Federkraft auf den Führungsholm 12 erzeugt wird.

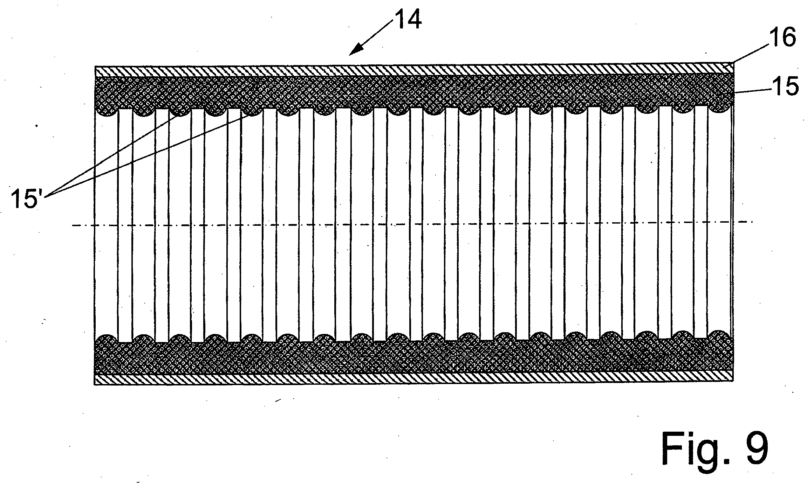

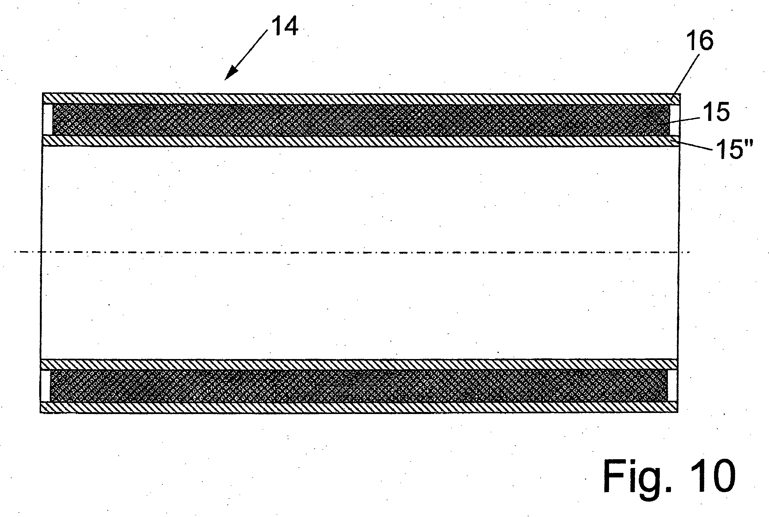

In den Figuren 9 und 10 ist jeweils ein weiteres Ausführungsbeispiel eines Rückstellelementes 14 dargestellt, wobei das in der Figur 9 gezeigte im Prinzip dem der Figuren 2 und 3 entspricht. Allerdings sind hierbei die Stützlippen 15' integraler Bestandteil des Stützteiles 15, das von einer Metallhülse ummantelt ist, die den Mitnehmer 16 bildet.

In der Figur 10 ist erkennbar, dass das Stützteil 15 innenseitig von einer vorzugsweise geschlitzten Innenhülse 15" ausgekleidet ist, die am Führungsholm 12 im Sinne der Erfindung anliegt.

Bezugszeichenliste

| | |
|---|---|
| 1 | Bremssattel |
| 2 | Bremsträger |
| 3 | Bremsscheibe |
| 4 | Bremsbelag |
| 5 | Bremsbelag |
| 6 | Brücke |
| 7 | Stellspindel |
| 8 | Nachstelleinrichtung |
| 9 | Kette |
| 10 | Festlager |
| 11 | Loslager |
| 12 | Führungsholm |
| 13 | Rückstelleinrichtung |
| 14 | Rückstellelement |
| 15 | Stützteil |
| 15' | Stützlippen |
| 15" | Innenhülse |
| 16 | Mitnehmer |
| 17 | Aufnahmehülse |
| 18 | Haftring |
| 19 | Schraubenfeder |

20 Anschlaghülse
21 Gleithülse
22 Stützring
23 Lagerhülse
24 Klemmring
25 Schlitz
26 Kragen

## Patentansprüche

1. Scheibenbremse, insbesondere für ein Nutzfahrzeug, mit

   a) einem eine Bremsscheibe (3) übergreifenden, als Schiebesattel ausgebildeten Bremssattel (1),

   b) zwei, im Bremssattel (1) angeordneten, gegensinnig bewegbaren und die Bremsscheibe (3) in Funktionsstellung kontaktierenden Bremsbelägen (4, 5),

   c) mindestens einem einen Führungsholm (12) aufweisenden Befestigungselement zur Befestigung des Bremssattels (1) an einem ortsfesten Bremsträger (2),

   d) einer Zuspanneinrichtung, mit der über wenigstens eine Stellspindel (7) der zugeordnete aktionsseitige Bremsbelag (4) gegen die Bremsscheibe (3) pressbar ist,

   e) einer verdrehsicher an der Stellspindel (7) angeschlossenen Nachstelleinrichtung (8), mit der eine verschleißbedingte Änderung eines Lüftspiels zwischen den Bremsbelägen (4, 5) und der Bremsscheibe (3) im Wesentlichen ausgleichbar ist,

   f) einer aktionsseitig angeordneten und ein beim bremsbedingten Verschieben des Bremssattels (1) elastisch verformbares Rückstellelement (14) aufweisenden Rückstelleinrichtung (13), mit der der Bremssattel (1) entgegen der Verschieberichtung beim Zuspannen selbsttätig in eine Ausgangsstellung bringbar ist,
   **dadurch gekennzeichnet, dass**
   g) die Rückstelleinrichtung (13) ein beim bremsbedingten Verschieben des Bremssattels (1) in seiner Lage gegenüber dem Bremsträger (2) verharrendes Stützteil (15) aufweist, das mit dem federnden Rückstellelement (14) unter dessen Verformung in Wirkverbindung steht, oder das Rückstellelement (14) bildet,

   h) wobei die maximal mögliche Verstellkraft des Rückstellelementes (14) geringer ist als die minimal mögliche Stellkraft der Nachstelleinrichtung (8) oder

   i) die minimal mögliche Verstellkraft des Rückstellelementes (14) größer ist als die maximal mögliche Stellkraft der Nachstelleinrichtung (8).

2. Scheibenbremse nach Anspruch 1, **dadurch gekennzeichnet, dass** das Stützteil (15) mit Haftreibung am Führungsholm (12) anliegt.

3. Scheibenbremse nach Anspruch 2, **dadurch gekennzeichnet, dass** die Haftreibung so bemessen ist, dass das Stützteil (15) bei einer Bremsung auf dem Führungsholm (12) verharrt und bei einer verschleißbedingten Verstellung des Bremssattels (1) entsprechend dem Verschleißhub relativ zum Führungsholm (12) verschiebbar ist.

4. Scheibenbremse nach Anspruch 1, **dadurch gekennzeichnet, dass** das Stützteil (15) mehrere, parallel und abständig zueinander angeordnete, umfänglich des Führungsholms (12) angeordnete in Verschieberichtung des Bremssattels (1) elastisch verformbare Stützlippen (15') aufweist, die mittelbar oder unmittelbar in den Bremssattel (1) eingreifen.

5. Scheibenbremse nach Anspruch 4, **dadurch gekennzeichnet, dass** die Stützlippen (15') aus einem elastischen Kunststoff, vorzugsweise einem Elastomer bestehen.

6. Scheibenbremse nach Anspruch 4, **dadurch gekennzeichnet, dass** die Stützlippen (15') in Nuten eines hülsenförmigen, mit dem Bremssattel (1) verbundenen Mitnehmers (16) eingreifen.

7. Scheibenbremse nach Anspruch 4, **dadurch gekennzeichnet, dass** jede Stützlippe (15') mit Haftreibung am Führungsholm (12) anliegt.

8. Scheibenbremse nach Anspruch 4, **dadurch gekennzeichnet, dass** die Stützlippen (15') an einer mit Haftreibung am Führungsholm (12) anliegenden Stützhülse angeformt sind.

**9.** Scheibenbremse nach Anspruch 1, **dadurch gekennzeichnet, dass** das Stützteil (15) aus einer Aufnahmehülse (17) und einem darin eingebetteten, mit Haftreibung am Führungsholm (12) anliegenden Haftring (18) besteht, wobei an einer Stirnseite der Aufnahmehülse (17) das federnde Rückstellelement (14) in Form einer Schraubenfeder (19) anliegt, die konzentrisch auf dem Führungsholm (12) geführt ist und sich andererseits am Bremssattel (1) oder einem damit verbundenen Teil abstützt.

**10.** Scheibenbremse nach Anspruch 9, **dadurch gekennzeichnet, dass** der Bremssattel (1) gegenüber der Aufnahmehülse (17) gleitbar gelagert ist.

**11.** Scheibenbremse nach Anspruch 9, **dadurch gekennzeichnet, dass** die Schraubenfeder (19) auf einer Anschlaghülse (20) geführt ist, die mit dem Bremssattel (1) verbunden ist und die in Nichtfunktionsstellung der Scheibenbremse mit einer Anschlagkante abständig zur Aufnahmehülse (17) angeordnet ist.

**12.** Scheibenbremse nach Anspruch 11, **dadurch gekennzeichnet, dass** der Abstand zwischen der Anschlaghülse (20) und der Aufnahmehülse (17) in Nichtfunktionsstellung der Bremse dem reaktionsseitigen Lüftspiel entspricht.

**13.** Scheibenbremse nach Anspruch 1, **dadurch gekennzeichnet, dass** das Stützteil (15) aus mindestens einem, vorzugsweise einer Packung mehrerer Klemmringe (24) besteht, die mit Haftreibung am Führungsholm (12) anliegen.

**14.** Scheibenbremse nach Anspruch 13, **dadurch gekennzeichnet, dass** jeder Klemmring (24) einen Längsschlitz (25) aufweist.

**15.** Scheibenbremse nach Anspruch 1, **dadurch gekennzeichnet, dass** das Stützteil (15) sich auf seiner dem Rückstellelement (14) gegenüberliegenden Seite an einer Schulter einer Stufenbohrung des Brernssattels (1) in Nichtgebrauchsstellung der Scheibenbremse abstützt.

**Claims**

**1.** Disc brake, particularly for a commercial vehicle, having

a) a brake calliper (1) which engages over a brake disc (3) and is configured as a sliding calliper,
b) two brake linings (4, 5) which are arranged in the brake calliper (1), can be moved in opposite directions and make contact with the brake disc (3) in the functional position,
c) at least one fastening element which has a guide spar (12) for fastening the brake calliper (1) to a stationary brake carrier (2),
d) a brake application device, with which the associated action-side brake lining (4) can be pressed against the brake disc (3) via at least one control spindle (7),
e) an adjusting device (8) which is connected in a rotationally locked manner on the control spindle (7) and with which a wear-induced change in an air play between the brake linings (4, 5) and the brake disc (3) can be substantially compensated,
f) a restoring device (13) which is arranged on the action side and has a restoring element (14) which can be deformed elastically during the braking-induced displacement of the brake calliper (1), with which restoring device (13) the brake calliper (1) can be brought automatically into an initial position counter to the displacement direction during the brake application,
**characterised in that**
g) the restoring device (13) has a supporting part (15) which remains in its position with respect to the brake carrier (2) during the braking-induced displacement of the brake calliper (1) and is operatively connected to the resilient restoring element (14) with deformation of the latter, or forms the restoring element (14),
h) wherein the maximum possible displacement force of the restoring element (14) is less than the minimum possible actuating force of the adjusting device (8) or
i) the minimum possible displacement force of the restoring element (14) is more than the maximum possible actuating force of the adjusting device (8).

**2.** Disc brake according to claim 1, **characterised in that** the supporting element (15) bears against the guide spar (12) with static friction.

3. Disc brake according to claim 2, **characterised in that** the static friction is dimensioned in such a way that the supporting part (15) remains on the guide spar (12) in the case of a braking operation and can be displaced relative to the guide spar (12) in the case of a wear-induced adjustment of the brake calliper (1), according to the wear stroke.

4. Disc brake according to claim 1, **characterised in that** the supporting part (15) has a plurality of supporting lips (15') which are arranged parallel to and at a spacing from one another, are arranged on the circumference of the guide spar (12), can be deformed elastically in the displacement direction of the brake calliper (1), and engage indirectly or directly into the brake calliper (1).

5. Disc brake according to claim 4, **characterised in that** the supporting lips (15') are composed of an elastic plastic, preferably an elastomer.

6. Disc brake according to claim 4, **characterised in that** the supporting lips (15') engage in grooves of a sleeve-shaped entrainment element (16) which is connected to the brake calliper (1).

7. Disc brake according to claim 4, **characterised in that** each supporting lip (15') bears against the guide spar (12) with static friction.

8. Disc brake according to claim 4, **characterised in that** the supporting lips (15') are formed integrally on a supporting sleeve which bears against the guide spar (12) with static friction.

9. Disc brake according to claim 1, **characterised in that** the supporting part (15) consists of a receiving sleeve (17) and a static ring (18) which is embedded in the former and bears against the guide spar (12) with static friction, the resilient restoring element (14) in the form of a helical spring (19) bearing against an end side of the receiving sleeve (17), which helical spring (19) is guided concentrically on the guide spar (12) and is supported on the other side on the brake calliper (1) or a part which is connected thereto.

10. Disc brake according to claim 9, **characterised in that** the brake calliper (1) is mounted such that it can slide with respect to the receiving sleeve (17).

11. Disc brake according to claim 9, **characterised in that** the helical spring (19) is guided on a stop sleeve (20) which is connected to the brake calliper (1) and, in the non-functional position of the disc brake, is arranged at a spacing from the receiving sleeve (17) by way of a stop edge.

12. Disc brake according to claim 11, **characterised in that**, in the non-functional position of the brake, the spacing between the stop sleeve (20) and the receiving sleeve (17) corresponds to the reaction-side air play.

13. Disc brake according to claim 1, **characterised in that** the supporting part (15) consists of at least one, preferably a package of a plurality of clamping rings (24), which bear against the guide spar (12) with static friction.

14. Disc brake according to claim 13, **characterised in that** each clamping ring (24) has a longitudinal slot (25).

15. Disc brake according to claim 1, **characterised in that**, on its side which lies opposite the restoring element (14), the supporting part (15) is supported on a shoulder of a stepped bore of the brake calliper (1) in the non-use position of the disc brake.

**Revendications**

1. Frein à disque, en particulier pour un véhicule utilitaire, comprenant

a) un étrier de frein (1) chevauchant un disque de frein (3) et configuré sous forme d'un étrier coulissant,
b) deux garnitures de frein disposées dans ledit étrier de frein (1), qui sont mobiles en sens opposés et qui se trouvent en contact avec ledit disque de frein (3) en position de service,
c) au moins un élément de fixation comprenant un guidon (12) pour' la fixation dudit étrier de frein (1) à un support de frein fixe (2),
d) un dispositif de serrage de frein, qui sert à presser la garniture de frein (4) affecté du côté d'actionnement via au moins une broche de réglage (7) contre ledit disque de frein (3),

e) un moyen de réajustage (8) relié, en étant bloqué contre une rotation, à ladite broche de réglage (7), qui sert à compenser essentiellement un changement dû à l'usure d'un jeu entre lesdites garnitures de frein (4, 5) et ledit disque de frein (3),

f) un moyen de rappel (13) disposé du côté d'actionnement et comprenant un élément de rappel (14) élastiquement déformable au déplacement dudit étrier de frein, induit par freinage, ce moyen servant à rappeler ledit étrier de frein (1) automatiquement dans le sens opposé à la direction de déplacement quand le frein est serré, **caractérisé en ce**

g) **que** ledit moyen de rappel (13) comprend un élément de support (15) restant dans sa position par rapport audit support de frein (2) au déplacement dudit étrier de frein (1), induit par freinage, ce moyen se trouvant en liaison active avec ledit élément de rappel élastique, en déformant le dernier, ou constituant ledit élément de rappel (14),

h) dans lequel la force de déplacement maximale possible dudit élément de rappel (14) est plus faible que la force de réglage minimale possible dudit moyen de réajustage (8), ou

i) la force de déplacement minimale possible dudit élément de rappel (14) est plus grande que la force de réglage maximale possible dudit moyen de réajustage (8).

2. Frein à disque selon la revendication 1, **caractérisé en ce que** ledit élément de support (15) porte contre ledit guidon (12) à friction par adhérence.

3. Frein à disque selon la revendication 2, **caractérisé en ce que** la friction par adhérence est dimensionnée de façon, que ledit élément de support (15) reste sur ledit guidon (12) au cas de freinage, et soit déplaçable par rapport audit guidon (12) au cas d'un réajustage dudit étrier de frein (1) en raison de l'usure.

4. Frein à disque selon la revendication 1, **caractérisé en ce que** ledit élément de support (15) comprend une pluralité des lèvres de support (15') élastiquement déformable en direction de déplacement dudit étrier de frein (1), qui sont disposées en parallèle et aux écarts l'une de l'autre le long de la périphérie dudit guidon, et qui se trouvent en prise indirectement ou directement dans ledit étrier de frein (1).

5. Frein à disque selon la revendication 4, **caractérisé en ce que** lesdites lèvres de support (15') consistent en une matière synthétique élastique, de préférence en un élastomère.

6. Frein à disque selon la revendication 4, **caractérisé en ce que** lesdites lèvres de support (15') se trouvent en prise dans des rainures d'un entraîneur (16) sous forme d'une douille, qui est relié audit étrier de frein (1).

7. Frein à disque selon la revendication 4, **caractérisé en ce que** chaque lèvre de support (15') porte contre ledit guidon (12) à friction par adhérence.

8. Frein à disque selon la revendication 4, **caractérisé en ce que** lesdites lèvres (15') sont moulées à une douille de support, qui porte contre ledit guidon (12) à friction par adhérence.

9. Frein à disque selon la revendication 1, **caractérisé en ce que** ledit élément de support (15) est constitué par une douille réceptrice (17) et un anneau adhérent (18) y encastré, qui porte contre ledit guidon (12) à friction par adhérence, audit élément de rappel élastique (14) sous forme d'un ressort hélicoïdal portant contre le côté de face de ladite douille réceptrice (17), audit ressort hélicoïdal étant guidé concentriquement sur ledit guidon (12), d'un côté, et, d'autre côté, s'appuyant audit étrier de frein (1) ou un élément relié au dernier.

10. Frein à disque selon la revendication 9, **caractérisé en ce que** ledit étrier de frein (1) est porté de façon glissant par rapport à ladite douille réceptrice (17).

11. Frein à disque selon la revendication 9, **caractérisé en ce que** ledit ressort hélicoïdal (19) est guidé sur une douille de butée (20), qui est relié audit étrier de frein (1) et qui est disposé, par un bord d'arrêt, à un écart par rapport à ladite douille réceptrice (17) en position hors service du frein à disque.

12. Frein à disque selon la revendication 11, **caractérisé en ce qu'**en position hors service du frein, l'écart entre ladite douille de butée (20) et ladite douille réceptrice (17) correspond au jeu du côté de réaction.

13. Frein à disque selon la revendication 1, **caractérisé en ce que** ledit élément de support (15) consiste en au moins une bague de serrage, de préférence en une garniture de plusieurs bagues de serrage (24), qui portent à friction par adhérence contre ledit guidon (12).

14. Frein à disque selon la revendication 13, **caractérisé en ce que** chaque bague de serrage (24) présente une fente longitudinale (25).

15. Frein à disque selon la revendication 1, **caractérisé en ce que** ledit élément de support (15) s'appuye, de son côté opposé audit élément de rappel (14), à une épaule d'un alésage étagé dudit étrier de frein (1) en position hors service du frein à disque.

Fig. 1

Fig. 2

Fig. 3

Fig. 4

Fig. 5

EP 2 118 512 B1

Fig. 6

Fig. 7

25

(12)

24

Fig. 8

Fig. 9

Fig. 10

**IN DER BESCHREIBUNG AUFGEFÜHRTE DOKUMENTE**

**In der Beschreibung aufgeführte Patentdokumente**

- DE 19946677 A1
- DE 1211448 B

- DE 3148133 A1
- EP 645551 A1